# EUROPÄISCHE PATENTSCHRIFT

(11) **EP 1 619 117 B1**
(45) Veröffentlichungstag und Bekanntmachung des Hinweises auf die Patenterteilung: **25.11.2009**
(21) Anmeldenummer: 05015760.1
(22) Anmeldetag: 20.07.2005
(51) Int. Cl.: B64C 9/04

(54) **Klappen-Kopplungssytem für Luftfahrzeuge**
Flap drive coupling mechanism
Mécanisme de couplage pour volets d'avion

(30) Priorität: 23.07.2004 DE 102004035921
(43) Veröffentlichungstag der Anmeldung: 25.01.2006
(73) Patentinhaber: Airbus Operations GmbH, 21129 Hamburg (DE)
(72) Erfinder: Poppe, Bernd, 28201 Bremen (DE); Auhagen, Kurt, 28357 Bremen (DE)
(74) Vertreter: Maiwald Patentanwalts GmbH

(56) Entgegenhaltungen:
- DE-A1- 3 505 839
- DE-U1- 9 113 090
- US-A- 4 471 925
- US-A- 5 845 877

## Beschreibung

Die Erfindung betrifft ein Kopplungssystem insbesondere für an einem Tragflügel eines Luftfahrzeuges nebeneinander liegende Klappen wie zum Beispiel Landeklappen oder Hochauftriebsklappen.

Klappen dieser Art sind im allgemeinen jeweils einem separaten Antriebssystem, das über eine gemeinsame Welle aktiviert werden kann, zugeordnet, mit dem jede der Klappen einzeln angetrieben bzw. geführt wird. Um bei einem Ausfall oder einem Fehler eines der Antriebssysteme eine unkontrollierte Bewegung der betreffenden Klappe zu vermeiden, sind benachbarte Klappen über jeweils ein Kopplungssystem miteinander verbunden.

Ein solches, als Ausfallsicherung (in horizontaler Flugrichtung) dienendes Kopplungssystem ist zum Beispiel in der DE 35 05 839 C2 offenbart. Bei diesem System sind benachbarte Klappen über eine in Form einer Kolben-Zylinderanordnung ausgebildete Kopplungsstrebe miteinander gekoppelt, deren Längenveränderung durch zwei Anschläge begrenzt ist. Falls die Koppelstrebe an einen Anschlag kommt, können Kräfte (oder Lasten) übertragen werden. Die Kopplungsstrebe lässt somit nur eine begrenzte Abweichung der relativen Bewegungen der an ihr befestigten Klappen zu. Vor dem Erreichen eines Anschlages wird ein Schalter aktiviert, um bei Erreichen eines der Anschläge einen Ausfall eines der Antriebs- bzw. Führungssysteme zu signalisieren.

Nachteilig bei diesem Kopplungssystem ist jedoch die Tatsache, dass es nur für eine horizontale Kopplung von Klappensystemen geeignet ist. Für Klappensysteme von neueren Flugzeugentwicklungen, insbesondere Großflugzeugen, ist es nur in Kombination mit weiteren innovativen Maßnahmen, die eine vertikale Kopplung des Klappensystems umsetzen können, geeignet. Dies beruht zum einen auf den relativ hohen Kräften in vertikaler Richtung, die mit den großen Abmessungen insbesondere der Landeklappen von solchen Großflugzeugen verbunden sind, die die Belastungsfähigkeit der bekannten Kopplungssysteme überschreiten können. Zum anderen sind auch die Bewegungen benachbarter Klappen in seitlicher Richtung und somit die maximalen Spaltbreiten zwischen den benachbarten Klappen häufig so groß, dass sie von den bekannten Kopplungs- und Dichtungssystemen nicht mehr überbrückt werden können.

Ein weiteres Hindernis für die Anwendung bekannter Kopplungssysteme besteht darin, dass die Dicke der Landeklappen, das heißt deren Bauhöhe, auf Grund des sehr schlanken Klappenstraks im Verhältnis zur Klappentiefe wesentlich geringer ist und somit zumindest in Richtung der Höhe wesentlich weniger Platz für die Kopplungssysteme zur Verfugung steht.

Aus DE 91 13 090 U1 ist ein Flügel mit einer schwenkbar in einer Ausnehmung an diesen gelagerten Klappe bekannt, wobei der Spalt zwischen der Klappe und einer seitlich angrenzenden Kante der Ausnehmung oder der Wandung durch eine Platte geschlossen ist.

Es ist eine Aufgabe der Erfindung, ein Kopplungssystem für nebeneinander liegende Klappen von Luftfahrzeugen zu schaffen, das belastbar ist und das zu einer gleichmäßigen Strömung entlang der Klappen führt.

Gelöst wird die Aufgabe mit einem Kopplungssystem für nebeneinander liegende Klappen von Luftfahrzeugen, mit den Merkmalen in Anspruch 1.

Die Unteransprüche haben vorteilhafte Ausgestaltungen und Weiterbildungen der Erfindung zum Inhalt.

Weitere Einzelheiten, Merkmale und Vorteile der Erfindung ergeben sich aus der folgenden Beschreibung von bevorzugten Ausführungsformen anhand der Zeichnung. Es zeigt:
- Fig. 1: Landeklappen einer Flugzeugtragfläche in eingefahrener Stellung;
- Fig. 2: die Landeklappen in ausgefahrener Stellung;
- Fig. 3: eine Draufsicht auf ein erfindungsgemäßes Kopplungssystem in einer Stellung bei einem großen Klappenabstand;
- Fig. 4: das Kopplungssystem gemäß Figur 3 in einer Stellung bei einem kleinen Klappenabstand;
- Fig. 5: einen Querschnitt entlang der Linie D-D in Figur 2;
- Fig. 6: einen Querschnitt entlang der Linie E-E in Figur 2;
- Fig. 7: einen Querschnitt entlang der Linie F-F in Figur 2;
- Fig. 8: einen Querschnitt entlang der Linie H-H in Figur 2;
- Fig. 9: einen Querschnitt entlang der Linie G-G in Figur 2;
- Fig. 10: einen Querschnitt entlang der Linie B-B in Figur 2; und
- Fig. 11: einen Querschnitt entlang der Dichtebene einer Klappe.

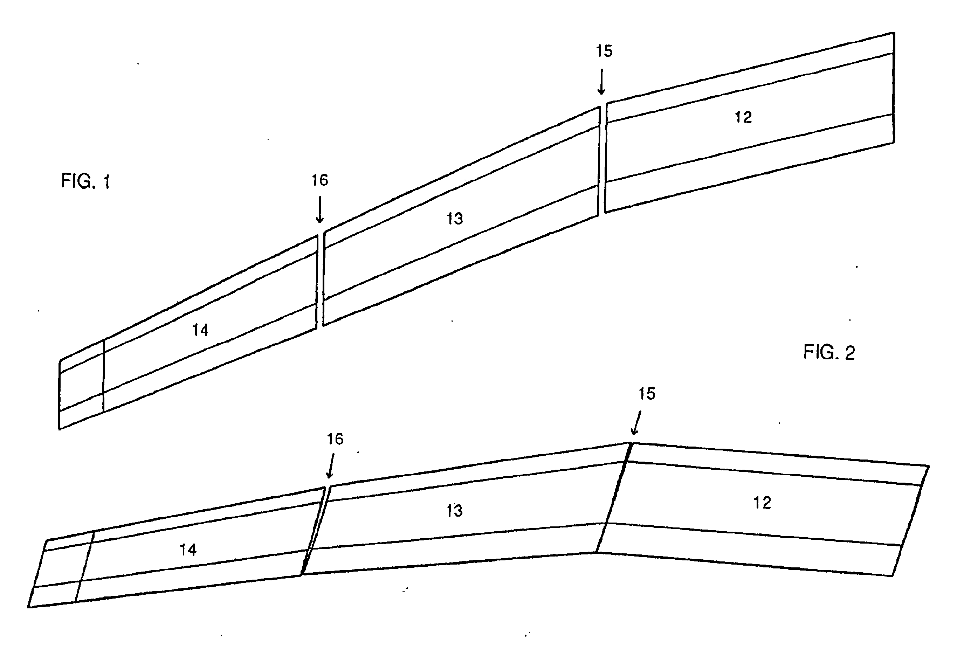

Die Figuren 1 und 2 zeigen drei Landeklappen 12, 13, 14, die sich nebeneinander entlang einer Flugzeugtragfläche, im allgemeinen an deren Hinterkantenbereich, erstrecken. Die erste Landeklappe 13 liegt dabei an der Seite des Fahrzeugrumpfes, während sich die zweite und dritte Landeklappe 13, 14 in Richtung der Flügelspitze daran anschließen.

Figur 1 zeigt die relative Lage dieser drei Landeklappen in eingefahrener Stellung (0 Grad Klappenstellung), während in Figur 2 deren relative Lage in ausgefahrener Stellung gezeigt ist. Die Bewegung der Landeklappen erfolgt im allgemeinen über Drehantriebe, wobei jeder Landeklappen jeweils ein eigener Antrieb (nicht dargestellt) zugeordnet ist. Wie aus den Darstellungen deutlich wird, unterscheiden sich die Breite und der Verlauf der Spalte 15, 16 zwischen der zweiten und der dritten bzw. der dritten und der vierten Landeklappe in den ein- und ausgefahrenen Stellungen erheblich voneinander. Aufgrund der seitlichen Relativbewegungen von benachbarten Klappen werden die Spalte 15, 16 beim Ausfahren der Klappen nicht nur schmaler, sondern nehmen auch eine mehr oder weniger ausgeprägte V-Form an.

Das zwischen jeweils benachbarten Landeklappen 12, 13; 13, 15 angeordnete erfindungsgemäße Klappen-Kopplungssystem dient einerseits zur Kopplung der Landeklappen in dem Fall, in dem einer der Antriebe in Verbindung mit einer Kopplungsstrebe ausfällt und ist insbesondere so ausgebildet, dass es dabei auch die relativ hohen, bei Großflugzeugen auf die Klappen einwirkenden Kräfte übertragen kann. Andererseits dient das Klappen-Kopplungssystem zur Schaffung eines Profilausgleichs, mit dem insbesondere in eingefahrener Stellung die relative große Breite der Spalte 15, 16 überbrückt bzw. aerodynamisch weitgehend geschlossen wird.

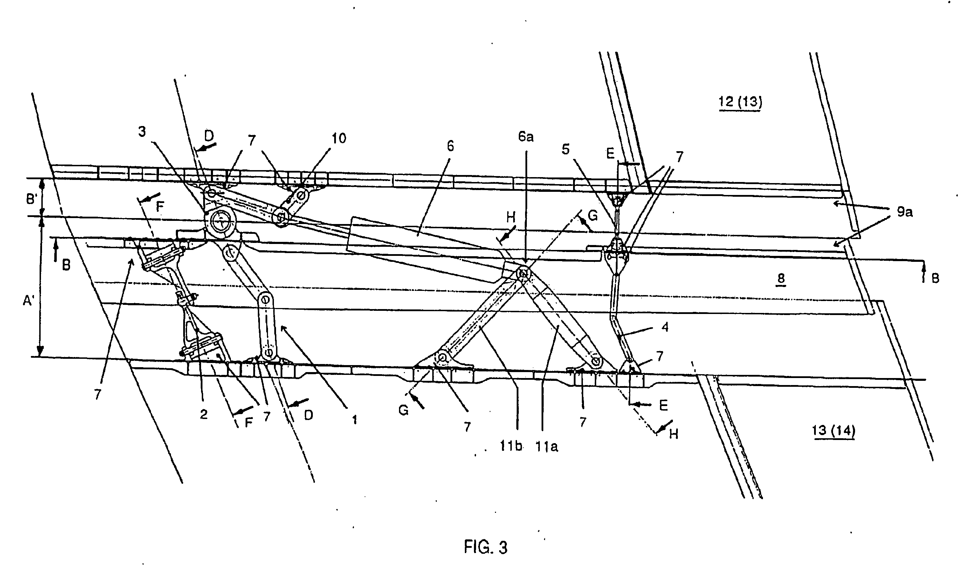

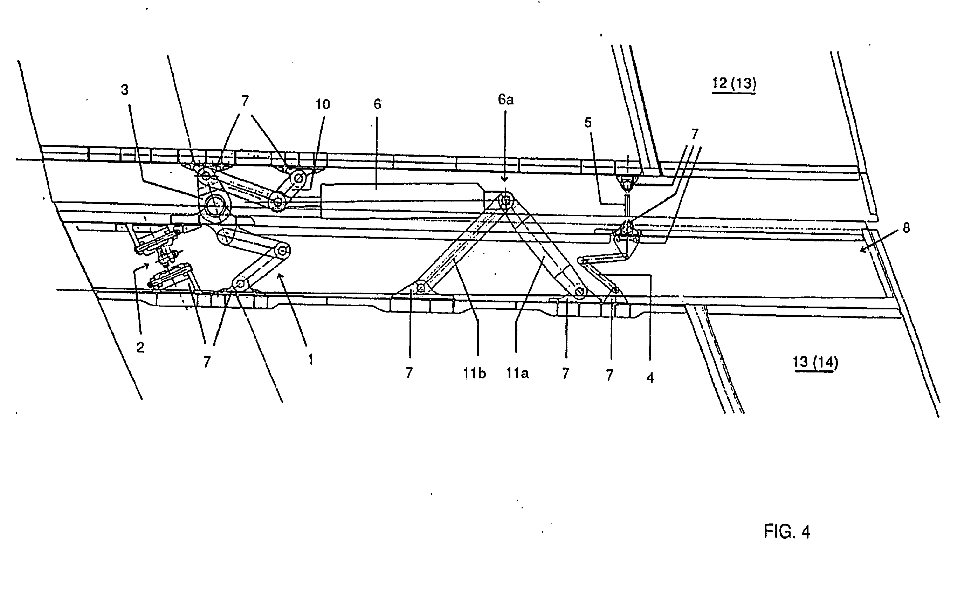

Die Figuren 3 und 4 zeigen in Draufsicht schematisch ein erfindungsgemäßes Klappen-Kopplungssystem, das zwischen der ersten und der zweiten Landeklappe 12, 13 und ggf. zwischen der zweiten und der dritten Landeklappe 13, 14 montiert werden kann. In Figur 3 befinden sich die Landeklappen in der in Figur 1 dargestellten eingefahrenen Stellung mit relativ großem Klappenabstand und demzufolge relativ großer Breite der Spalte 15, 16, während in Figur 4 die ausgefahrene Stellung gemäß Figur 2 mit kleinem Klappenabstand und schmalen Spalten 15, 16 gezeigt ist.

Das Kopplungssystem umfasst eine längenveränderliche Kopplungsstrebe 6 (interconnection strut) in Form einer Kolben-Zylinderanordnung, mittels der benachbarte Landeklappen 12, 13; 13, 14 zur Ausfallsicherung miteinander gekoppelt sind.

Zu diesem Zweck sind an der ersten Landeklappe 12 mittels zweier Beschläge 7 zwei erste Lasteinleitungsbeschläge 10 angeordnet, an deren Verbindungspunkt ein Ende der Kopplungsstrebe 6 angelenkt ist. Weiterhin sind mit der zweiten Landeklappe 13 mittels zweier Beschläge 7 zwei zweite Lasteinleitungsbeschläge 11a, 11b verbunden, an deren Verbindungspunkt das andere Ende der Kopplungsstrebe 6 angelenkt ist.

Die Kopplungsstrebe 6 übernimmt bei Ausfall eines der Klappenantriebe die Aufgabe eines zweiten Lastweges und verhindert somit den Klemmfall bzw. unkontrollierte Bewegungen der betreffenden Landeklappe.

Das Kopplungssystem umfasst weiterhin ein Ausgleichsprofil 8 in Form einer beweglichen Profilrippe, mit der der Spalt 15 (oder 16) zwischen der ersten und der zweiten Landeklappe 12, 13 (oder zwischen der zweiten und der dritten Landeklappen 13, 14) in deren eingefahrenem Zustand, das heißt bei großer Spaltbreite, zumindest weitgehend überbrückt bzw. aerodynamisch geschlossen wird.

Zur Führung und Fixierung des Ausgleichssprofils 8 ist an dessen an der Flügelvorderkante liegenden (d. h. vorderen) Bereich ein längenveränderlicher, zweiteiliger Führungsarm 2 zur Kraftübertragung vorgesehen, der an einer Seite über einen Beschlag 7 an dem Ausgleichsprofil 8 und an der anderen Seite über einen Beschlag 7 an der zweiten Landeklappe 13 befestigt ist.

An dem gegenüberliegenden hinteren Bereich des Ausgleichsprofils 8 befindet sich ein erster längenveränderlicher zweiteiliger Lenkarm 4, der mittels Beschlägen 7 jeweils an dem Ausgleichsprofil 8 und der zweiten Landeklappe 13 angelenkt ist.

Zwischen dem Führungsarm 2 und dem ersten Lenkarm 4 befindet sich im vorderen Bereich des Ausgleichsprofils 8 ein zweiter längenveränderlicher zweiteiliger Lenkarm 1, der wiederum mit beiderseitigen Beschlägen 7 an dem Ausgleichsprofil 8 und der zweiten Landeklappe 13 angelenkt ist.

An dem Ausgleichsprofil 8 ist weiterhin an seinem vorderen Bereich ein Kugelkopfbeschlag (Kugelkopfanbindung) 3 befestigt, der über einen Beschlag 7 mit der ersten Landeklappe 12 verbunden ist.

Schließlich befindet sich im hinteren Bereich des Ausgleichsprofils 8 eine Lenk- oder Steuerstange 5, die mit einem Ende über einen Beschlag 7 an der ersten Landeklappe 12 und mit dem anderen Ende über einen Beschlag 7 an dem Ausgleichsprofil 8 angelenkt ist.

In Figur 3 sind schließlich noch mit Pfeilen 9a die Orte angedeutet, an denen sich Dichtschläuche zur aerodynamischen Abdichtung des Übergangs zwischen dem verschiebbarem Ausgleichsprofil 8 und den benachbarten Landeklappen 12, 13 befinden.

Das Kopplungssystem wird zur Erläuterung der Funktion vorzugsweise in zwei Bereiche A' und B' zwischen den benachbarten Landeklappen 12 und 13 aufgeteilt.

Im Bereich A' erfolgt der Landeklappenprofilausgleich. Das Ausgleichsprofil 8 ist über die Arme 1, 2 und 4 mit der zweiten Landeklappe 13 und über die Kugelkopfanbindung 3 und die Lenkstange 5 mit der ersten Landklappe 12 gekoppelt. Die seitliche Führung des Ausgleichsprofils 8 erfolgt in der Weise über die Arme 1, 2 und 4, dass bei großem Klappenabstand das Ausgleichsprofil 8 zwischen den Landeklappen 12, 13 ausgefahren wird. Dies wird insbesondere bei einem Vergleich der Figuren 3 und 4 deutlich.

Im Bereich B' erfolgt über die Kugelkopfanbindung 3 im vorderen Bereich und über die Lenkstange 5 im hinteren Bereich des Kopplungssystems der Bewegungsausgleich zwischen der Landeklappe 12 und dem Ausgleichsprofil 8. Die an den Landeklappen durch Verformung auftretenden Kräfte werden über die Kugelkopfanbindung 3 und den zweiten Lenkarm 1 zwischen den benachbarten Landeklappen übertragen.

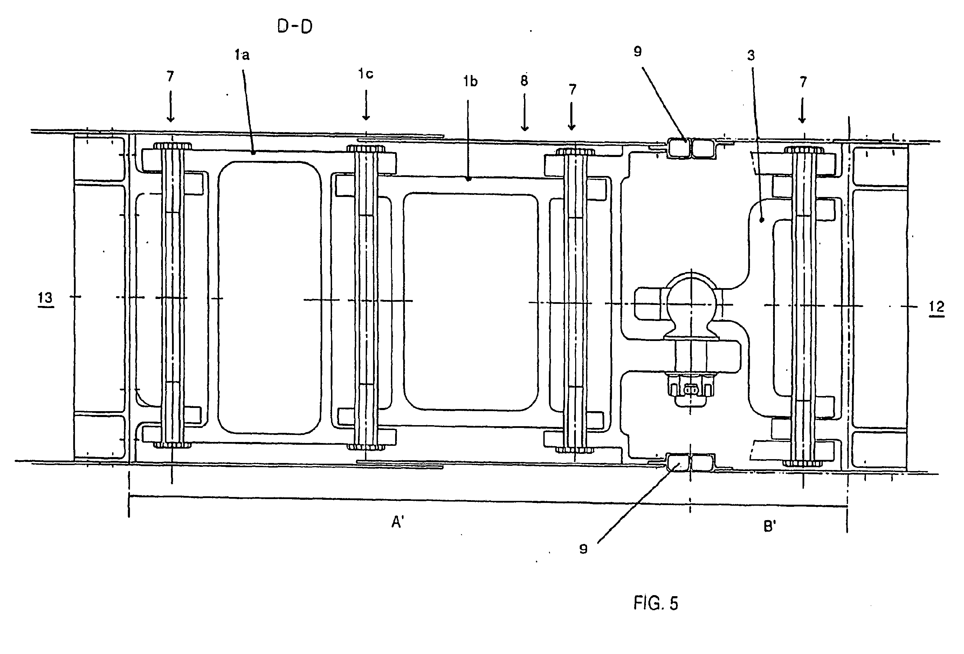

Figur 5 zeigt einen Querschnitt durch den zweiten Lenkarm 1 und die Kugelkopfanbindung 3 entlang der Linie D-D in Figur 3. Auch in dieser Figur sind die Bereiche A' und B' markiert. Ebenso wie in den Figuren 3 und 4 ist auch hier zu erkennen, dass sich der zweite Lenkarm 1 aus einem ersten Teil 1a und einem zweiten Teil 1b zusammensetzt, die über eine Gelenkverbindung 1c gelenkig miteinander verbunden sind. Der erste Teil 1a ist ferner über einen Beschlag 7 an der zweiten Landeklappe 13 und der zweite Teil 1b über einen Beschlag 7 an dem Ausgleichsprofil 8 angelenkt. Weiterhin ist in Figur 5 die Kugelkopfanbindung 3 dargestellt, die das Ausgleichsprofil 8 über einen Beschlag 7 mit der ersten Landeklappe 12 verbindet.

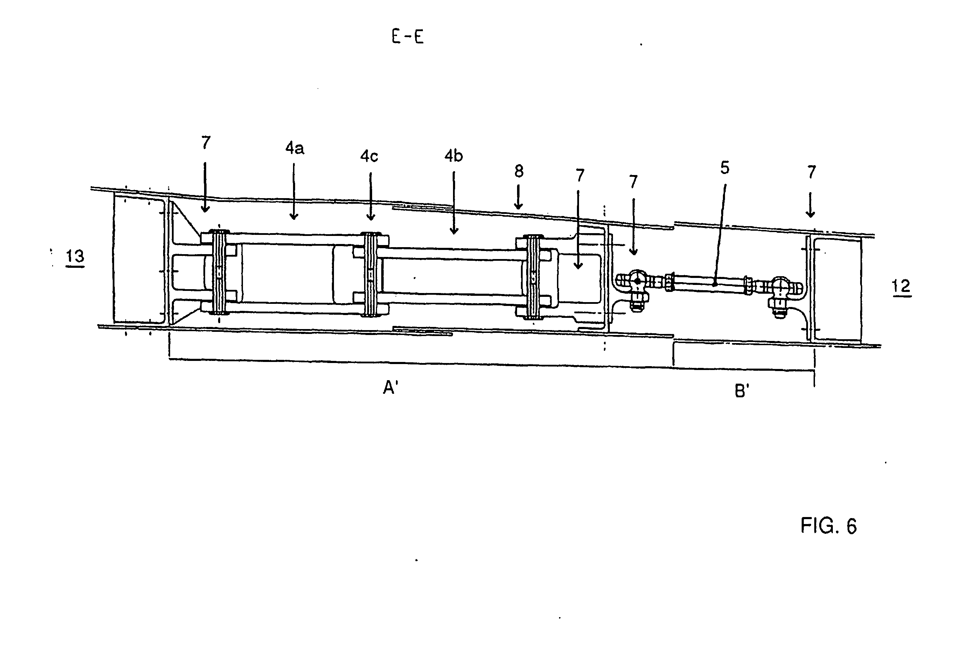

Figur 6 zeigt einen Querschnitt durch den ersten Lenkarm 4 sowie die Lenkstange 5 entlang der Linie E-E in Figur 3. Auch in dieser Figur sind wiederum die Bereiche A' und B' markiert. Der zweite Lenkarm 4 setzt sich aus einem ersten Teil 4a und einem zweiten Teil 4b zusammen, die über eine Gelenkverbindung 4c gelenkig miteinander verbunden sind. Der erste Teil 4a ist wiederum über einen Beschlag 7 an der zweiten Landeklappe 13 und der zweite Teil 4b über einen Beschlag 7 an dem Ausgleichsprofil 8 angelenkt. Wie in dieser Figur weiterhin zu erkennen ist, ist die Lenkstange 5 mit ihrem einen Ende über einen Beschlag 7 an dem Ausgleichsprofil 8 und mit ihrem anderen Ende über einen Beschlag 7 an der ersten Landeklappe 12 angelenkt.

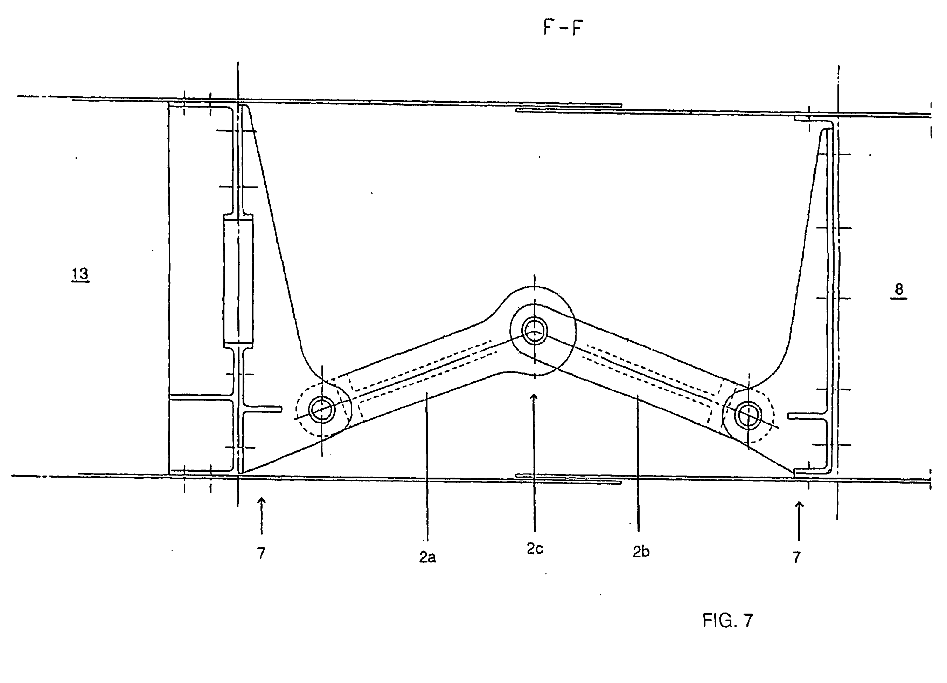

Figur 7 zeigt einen Querschnitt durch den Führungsarm 2 entlang der Linie F-F in Figur 3. Ebenso wie in den Figuren 3 und 4 ist auch in Figur 7 zu erkennen, dass sich der Führungsarm 2 wiederum aus einem ersten Teil 2a und einem zweiten Teil 2b zusammensetzt, die über eine Gelenkverbindung 2c gelenkig miteinander verbunden sind. Der erste Teil 2a ist über einen Beschlag 7 an der zweiten Landeklappe 13 und der zweite Teil 2b über einen Beschlag 7 an dem Ausgleichsprofil 8 angelenkt.

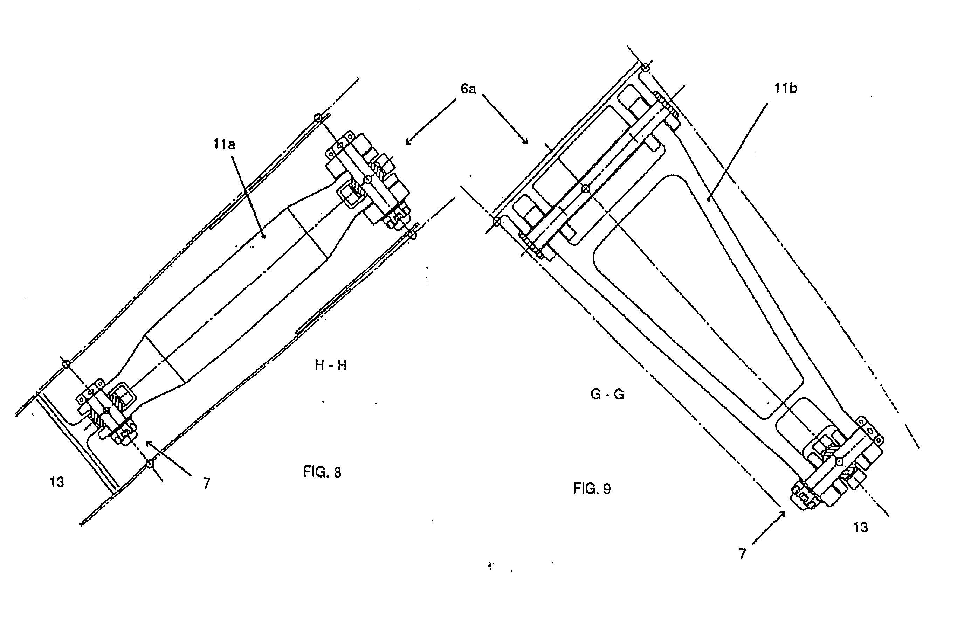

Figur 8 zeigt einen Querschnitt durch einen der beiden Lasteinleitungsbeschläge 11 a entlang der Linie H-H in Figur 3, während in Figur 9 ein Querschnitt durch den anderen Lasteinleitungsbeschlag 11b entlang der Linie G-G in Figur 3, jedoch um 90 Grad um dessen Längsachse gedreht, dargestellt ist. Die Lasteinleitungsbeschläge 11a, 11b sind über jeweils einen Beschlag 7 an der zweiten Landeklappe 13 angelenkt und miteinander über ein Gelenk 6a verbunden.

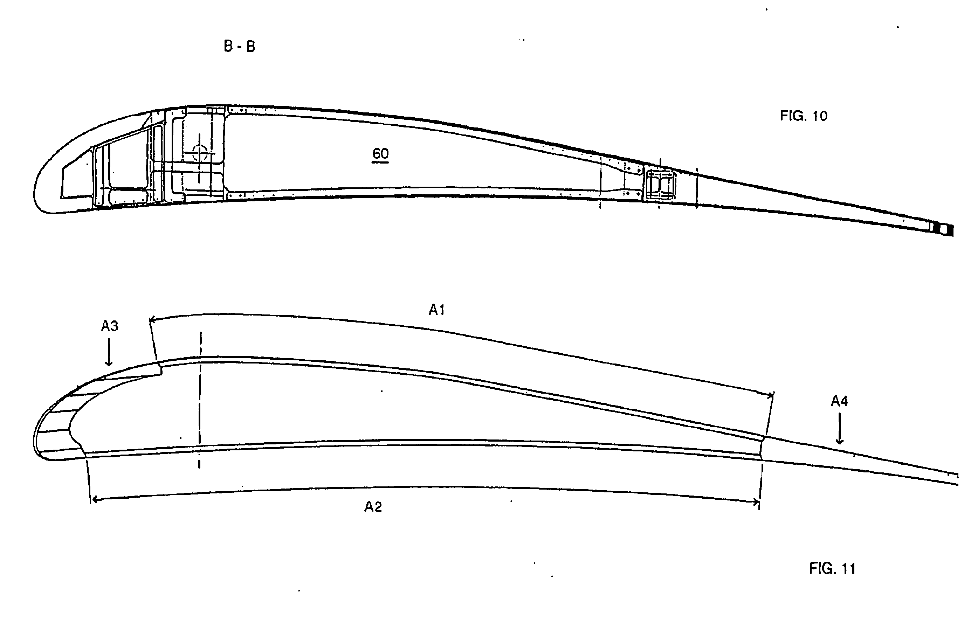

Figur 10 zeigt einen Querschnitt entlang des Ausgleichsprofils 8 entsprechend der Linie B-B in Figur 3. In dieser Darstellung ist im wesentlichen der Raum 60 zwischen den Landeklappen markiert, der für das Klappen-Kopplungssystem sowie die dazugehörigen Lasteinleitungsbeschläge zur Verfügung steht.

Figur 11 zeigt schließlich einen Querschnitt durch die Dichtebene zwischen den beiden Landeklappen 12, 13. Die mit den Bezugszeichen A 1 und A2 bezeichneten Bereiche stellen den Deckel mit Schlauchdichtung als Montageöffnung dar. Weiterhin ist in dieser Figur ein erstes Dichtkissen A3 an der vorderen Seite und ein zweites Dichtkissen A4 an der hinteren Seite der Landeklappen dargestellt.

## Patentansprüche

1. Kopplungssystem für nebeneinander liegende Klappen (12, 13; 13, 14) von Luftfahrzeugen, aufweisend
benachbarte Klappen,
eine Ausfallsicherung für die horizontale Kopplung der benachbarten Klappen in Form einer längenveränderlichen Kopplungsstrebe (6), die über zwei erste und zwei zweite Lasteinleitungsbeschläge (10; 11a, 11b) mit den benachbarten Klappen (12, 13; 13, 14) gekoppelt ist,
**dadurch gekennzeichnet, dass** das Kopplungssystem ferner aufweist:
ein Ausgleichsprofil (8) für einen sich beim Verfahren der Klappen verändernden Spalt (15, 16) zwischen den Klappen,
erste Anlenkungen (3, 5), mit denen das Ausgleichsprofil (8) an einer der Klappen (12; 13) geführt wird, und
zweite, längenveränderliche Anlenkungen (1, 2, 4) zum Verbinden des Ausgleichsprofils (8) an der anderen Klappe (13; 14), wobei die zweiten Anlenkungen einen längenveränderlichen Führungsarm (2) in einem Flügel-vorderen Bereich des Ausgleichsprofils (8) aufweisen,
wobei vertikale Kräfte zwischen den benachbarten Klappen über die Anlenkungen des Ausgleichsprofils (8) zur vertikalen Kopplung der Klappen übertragen werden.

2. Kopplungssystem nach Anspruch 1, bei dem die ersten Anlenkungen einen Kugelkopfbeschlag (3) in einem Flügel-vorderen Bereich des Ausgleichsprofils (8) aufweisen.

3. Kopplungssystem nach Anspruch 1, bei dem die ersten Anlenkungen eine Lenk- oder Steuerstange (5) in einem Flügel-hinteren Bereich des Ausgleichsprofils (8) aufweisen.

4. Kopplungssystem nach Anspruch 1, bei dem die zweiten Anlenkungen einen ersten längenveränderlichen Lenkarm (4) in einem Flügel-hinteren Bereich des Ausgleichsprofils aufweisen.

5. Kopplungssystem nach Anspruch 1, bei dem die zweiten Anlenkungen einen zweiten längenveränderlichen Lenkarm (1) in einem Flügel-vorderen Bereich des Ausgleichsprofils (8) aufweisen.

## Claims

1. An interconnection system for adjacent flaps (12, 13; 13, 14) of aircraft, having adjacent flaps,
a failsafe for the horizontal coupling of the adjacent flaps in the form of a longitudinally adjustable coupling strut (6) which is coupled via two first and two second load introduction fittings (10; 11a, 11b) to the adjacent flaps (12, 13; 13, 14),
**characterized in that** the interconnection system also has:
a compensation profile (8) for a gap (15, 16) between the flaps, which changes upon movement of the flaps,
first couplings (3, 5), by which the compensation profile (8) is guided on one of the flaps (12; 13), and
second longitudinally adjustable couplings (1, 2, 4) for connecting the compensation profile (8) to the other flap (13; 14), the second couplings having a longitudinally adjustable guide arm (2) in a front-wing area of the compensation profile (8), wherein
vertical forces being transmitted between the adjacent flaps via the linkages of the compensation profile (8) to the vertical coupling of the flaps.

2. The interconnection system according to Claim 1, wherein the first couplings have a spherical head fitting (3) in a front-wing area of the compensation profile (8).

3. The interconnection system according to Claim 1, wherein the first couplings have a steering or control rod (5) in a rear-wing area of the compensation profile (8).

4. The interconnection system according to Claim 1, wherein the second couplings have a first longitudinally adjustable steering arm (4) in a rear-wing area of the compensation profile.

5. The interconnection system according to Claim 1, wherein the second couplings have a second longitudinally adjustable steering arm (1) in a front-wing area of the compensation profile (8).

## Revendications

1. Système d'accouplement pour des volets (12, 13 ; 13, 14) juxtaposés d'aéronefs, présentant
des volets voisins,
une sécurité intégrée pour l'accouplement horizontal des volets voisins en forme d'une jambe de force d'accouplement (6) variable en longueur, qui est couplée par l'intermédiaire de deux premières et de deux deuxièmes ferrures d'introduction des charges (10 ; 11a, 11b) aux volets voisins (12, 13 ; 13, 14),
**caractérisé en ce que** le système d'accouplement présente en outre
un profilé d'équilibrage (8) pour une fente (15, 16) entre les volets, variable lors du déplacement de ces derniers,
des premières articulations (3, 5), par lesquelles le profilé d'équilibrage (8) est guidé sur l'un des volets (12 ; 13), et
des deuxièmes articulations (1, 2, 4), variables en longueur, pour la jonction du profilé d'équilibrage (8) sur l'autre volet (13 ; 14), les deuxièmes articulations présentant un bras de guidage (2) variable en longueur dans une zone avant d'aile du profilé d'équilibrage (8),
des forces verticales entre les volets voisins étant transmises par l'intermédiaire des articulations du profilé d'équilibrage (8) pour l'accouplement vertical des volets.

2. Système d'accouplement suivant la revendication 1, dans lequel les premières articulations présentent une ferrure de tête sphérique (3) dans une zone avant d'aile du profilé d'équilibrage (8).

3. Système d'accouplement suivant la revendication 1, dans lequel les premières articulations présentent une tige de commande ou directrice (5) dans une zone arrière d'aile du profilé d'équilibrage (8).

4. Système d'accouplement suivant la revendication 1, dans lequel les deuxièmes articulations présentent un premier bras directeur (4), variable en longueur, dans une zone arrière d'aile du profilé d'équilibrage.

5. Système d'accouplement suivant la revendication 1, dans lequel les deuxièmes articulations présentent un second bras directeur (1), variable en longueur, dans une zone avant d'aile du profilé d'équilibrage (8).
